# EUROPEAN PATENT SPECIFICATION

(11) **EP 3 967 660 B1**
(45) Date of publication and mention of the grant of the patent: **29.11.2023**
(21) Application number: 21214209.5
(22) Date of filing: 13.12.2021
(51) Int. Cl.: C01G 45/00, C01G 45/10, C22B 47/00

(54) **METHOD FOR PRODUCING MANGANESE SULFATE MONOHYDRATE**
VERFAHREN ZUR HERSTELLUNG VON MANGANSULFATMONOHYDRAT
PROCÉDÉ DE PRODUCTION DE SULFATE DE MANGANÈSE MONOHYDRATÉ

(43) Date of publication of application: 16.03.2022
(73) Proprietor: Ivane Javakhishvili Tbilisi State University LEPL, 0179 Tbilisi (GE); Tsurtsumia, Gigla, 0131 Tbilisi (GE)
(72) Inventor: Tsurtsumia, Gigla, 0131 Tbilisi (GE); Lezhava, Tinatin, 0183 Tbilisi (GE); Shengelia, Jemal, 0177 Tbilisi (GE); Koiava, Nana, 0177 Tbilisi (GE); Gogoli, Davit, 0186 Tbilisi (GE); Beriashvili, Levan, 0190 Tbilisi (GE)
(74) Representative: Koudine, Andreï

(56) References cited:
- US-A1- 2015 110 692
- ZHANG ET AL: "Manganese metallurgy review. Part I: Leaching of ores/secondary materials and recovery of electrolytic/chemical manganese dioxide", HYDROMETALLURGY, ELSEVIER SCIENTIFIC PUBLISHING CY. AMSTERDAM, NL, vol. 89, no. 3-4, 25 October 2007 (2007-10-25), pages 137-159, XP022314559, ISSN: 0304-386X, DOI: 10.1016/J.HYDROMET.2007.08.010

## Description

The invention relates to a field of manganese hydroelectrometallurgy and, in particular, to producing high-quality manganese compounds from manganese-comprising raw material, for example, to producing manganese sulfate monohydrate from a manganese oxide ore.

Manganese sulfate monohydrate (MnSO₄.H₂O) is one of the main materials used in manufacturing cathodes for new generation batteries, widely used in electric transport applications.

Due to the fact that by 2040 automotive industry will almost completely switch to electric vehicles manufacturing, by this time it is planned to increase an output of this product by 10-11 times.

In known processes of a manganese ores hydrometallurgical treatment, one of the main stages is reduction of manganese oxide forms (MnO₂, Mn₂O₃, MnOOH) in order to obtain aqueous solutions of manganese (II) salts, mainly aqueous solution of manganese sulfate.

Natural gas (CH₄), fuel oil, coke are used as a reducing agent in high-temperature processes, and such organic reducing agents as glucose, sucrose, glycerin, oxalic acid, etc. [D1] are used in low-temperature processes occurring in the aqueous phase. In all these processes, large amount of greenhouse gas is emitted into the atmosphere: 100 m³ of CO₂ (when using methane as the reducing agent) and 800 m³ of CO₂ (when using oxalic acid as the reducing agent) per one ton of manganese.

An environmental pollution also occurs when sulfur dioxide is used as the reducing agent. An emission of this substance into the atmosphere occurs during sulfatizing roasting of the ore, and when this gas is passed into the aqueous phase [D1].

Significant pollution of the environment with manganese dust also occurs at stages of preliminary preparation of the manganese oxide ore, namely: its preliminary dry grinding and drying.

Also, an end product in the form of manganese sulfate monohydrate obtained using known technologies, has less than 99% purity, that is, it comprises impurities. This is nonoptimal, especially when using such end product with low purity (less than 99%) for manufacturing the cathodes used in the above-mentioned new generation batteries.

Based on this original observation, this invention mainly aims to propose a method for producing manganese sulfate monohydrate from manganese-comprising raw material, which would solve two technical problems simultaneously, namely: producing of high purity (more than 99%, mainly, not less than 99.9 %) manganese sulfate monohydrate with at least reduced (in comparison with known technologies) emissions of greenhouse gase and other harmful substances into the atmosphere. To achieve this goal, the method for production of manganese sulfate monohydrate according to the invention comprises the following steps:
- a stage of electric leaching of manganese-comprising ore at a temperature from 20°C to 40°C and under constant air purging in a diaphragm-less electrolyzer,
- stages of jarosite, hydrolytic, sulfide and fluoride purifications of the obtained solutions,
- a stage of autoclave crystallization of a salt at a temperature from 160°C to 165°C and at a pressure from 0,60 MPa to 0,65 MPa.
In addition, the stage of electric leaching is performed with a concentration of iron ions from 3,5 g/l to 4,5 g/l using a stainless steel mesh as a cathode with a cathode current density from 200 A/m² to 250 A/m². A process control at the electric leaching stage is carried out by changing a value of a redox potential of a Fe³⁺/Fe²⁺ system. Under these conditions, the salt obtained after the autoclave crystallization stage is flushed with anhydrous methanol at a temperature from 30°C to 40°C during from 0,5 hour to 1 hour, while a ratio of a salt crystal mass and an anhydrous methanol volume is 1/2,5 kg/l.

Due to a synergy of all these features, the method described above for producing manganese sulfate monohydrate, according to the invention, can be classified as "environmental-friendly" technologies or "green" technologies, which damage to the environment is minimal. At the same time, a quality of the end product, namely, manganese sulfate monohydrate, increases, because its purity is high, i.e. exceeds 99%, mainly, it is not less than 99.9%.

Other distinguishing features and advantages of the invention are readily apparent from the description below which includes but not limited to the following features, with reference to the figures attached, where:
- figure 1 schematically represents a flow chart of a first option of the method for producing, according to the invention, due to which it is possible to produce only one (first) target end product, namely: high purity manganese sulfate monohydrate (99,9%);
- figure 2 schematically represents an electrochemical reactor for electric leaching of manganese-comprising ore;
- figure 3 schematically shows a flow chart of a second option of the method for producing, according to the invention, due to which, it is also possible to produce together with the first target end product (high purity manganese sulfate monohydrate (99.9%)) a second target end product (manganese carbonate hemihydrate), and also another by-product (dilute ammonium sulfate solution) that can be used, for example, as a liquid fertilizer.

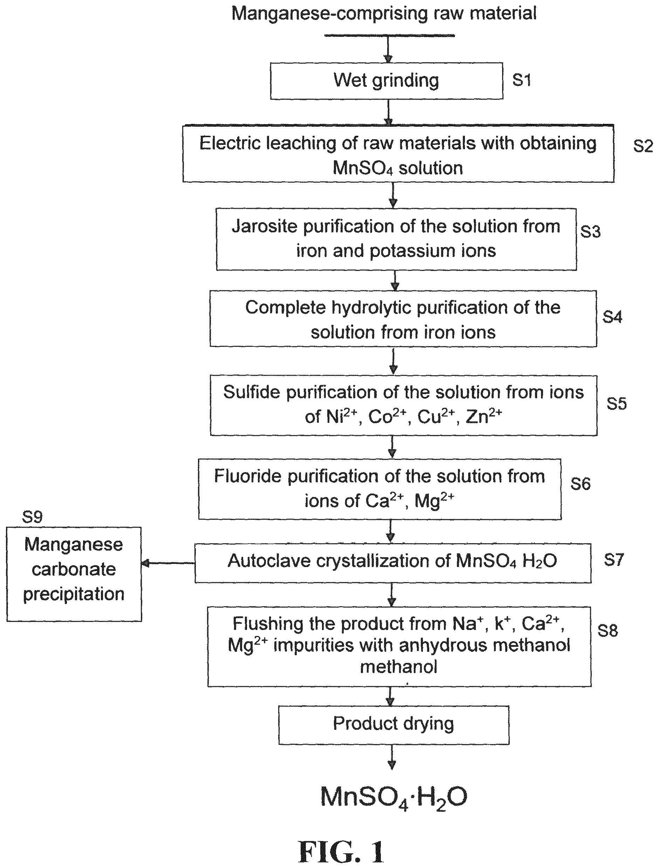

As mentioned earlier and shown in Figures 1 to 3, the invention relates to a method for producing high purity manganese sulfate monohydrate (that is, a purity that exceeds 99%, preferably, is at least 99,9%).

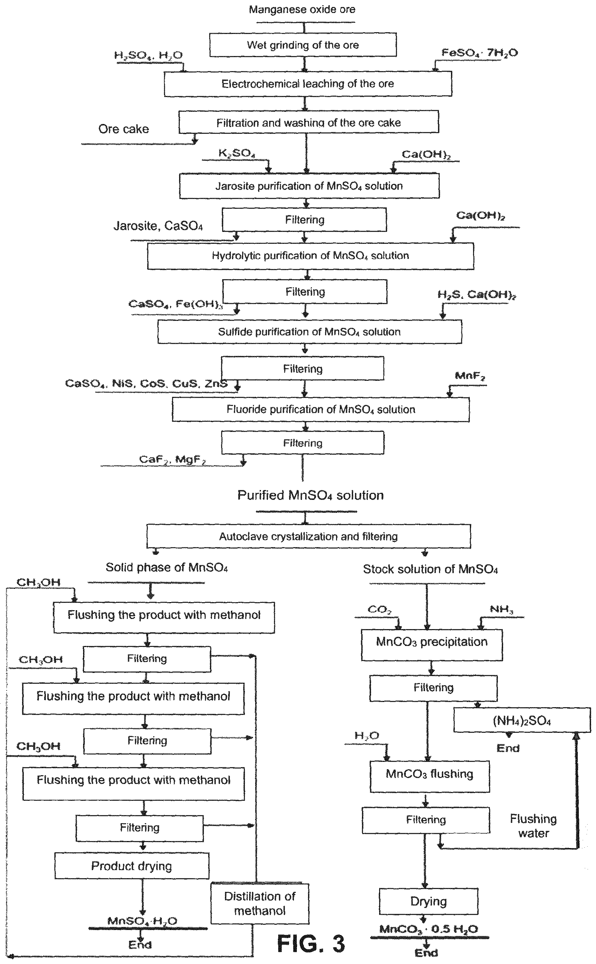

As can be seen from figure 1 (see also figure 3), the proposed method for producing high purity manganese sulfate monohydrate from manganese-comprising raw material may comprise a preliminary stage S1 for wet grinding manganese-comprising raw material (for example, manganese oxide ore). This makes it possible to exclude a stage of drying manganese-comprising raw material from the technological process, which contributes to reduce emissions of a manganese-comprising dust into the environment.

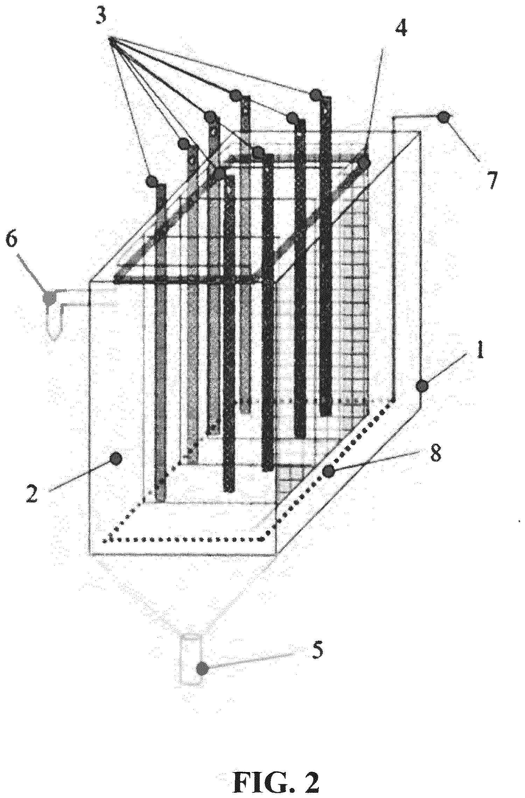

This preliminary stage of wet grinding S1 of manganese-comprising raw material is carried out in a ball mill (not shown). During the grinding process, a solid to liquid ratio (S/L) corresponds to 1,2/1 kg/l. A maximum particle size of the manganese-comprising ore after grinding comprises into an interval from 0,1 mm to 0,12 mm. The suspension obtained in the ball mill is fed to an electrochemical leaching reactor, which is shown schematically in Fig. 2.

This reactor comprises:
- a vessel 1,
- a stainless steel mesh used as a cathode 2;
- anodes 3;
- a cathode current lead 4;
- a first nozzle 5 for electrolyte supply;
- a second nozzle 6 for electrolyte output;
- a third nozzle 7 for compressed air supply;
- distributor 8 of air in the volume of the suspension.

As shown in Fig. 1 (see also Fig. 3), following stages of the proposed method are implemented sequentially one after another: electric leaching S2 of manganese-comprising raw material in order to obtain a manganese sulfate solution; purifications (jarosite S3; hydrolytic S4; sulfide S5; fluoride S6) of the solution from impurities; an autoclave crystallization S7 of manganese sulfate monohydrate and, finally, its flushing S8 with anhydrous methanol in order to produce (after appropriate drying) a first target end product (manganese sulfate monohydrate) with 99,9% purity.

As mentioned above, the manganese ore electro-leaching stage takes place in the reactor 1 at a temperature from 20°C to 40°C and under continuous air purging in a diaphragm-less electrolyzer. At the same time, as shown in Fig. 2, a stainless steel mesh is used as a cathode 2. Such design of the cathode 2 makes it possible to increase a turbulence of the suspension in a near-cathode layer, which leads to increase an electric leaching rate. Also, vigorous stirring of the suspension is facilitated by purging of compressed air (through a third nozzle 7 for compressed air supply in Fig. 2) into the electrolyzer. As compared to, for example, a flat stainless steel cathode, the stainless steel mesh cathode allows, under the same process conditions, increasing a current efficiency of MnO₂ electroreduction by approximately 1,5 - 1,6 times. In addition, the cathode 2 designed in the form of the stainless steel mesh simplifies a design of a current lead, increases a mechanical strength of the electrode (i.e., the cathode 2) and eliminates an undesirable process of clogging pores of the cathode 2 with solid particles of manganese-comprising raw material.

Moreover, the stage of electric leaching S2 is performed with a concentration of iron ions in the leach solution inside the reactor vessel 1 from 3,5 g/l to 4,5 g/l. Below this value, the current efficiency of the indirect electrochemical reduction of MnOz decreases due to increasing the current efficiency of competing cathodic process of hydrogen ions recovery. With higher concentration of the iron ions, the process of solutions purification from these ions becomes more complicated. Increasing in the concentration of the iron ions in the leaching solution, as mentioned above, makes it possible to increase a cathode current density up to 200-250 A/m² and thereby achieve a significant intensification of the leaching process. In this case, the current efficiency of electrochemical reduction of MnO₂ ore is 90 - 95%. With the higher current density, a fraction of the side process of hydrogen evolution increases, which is non-optimal.

Mainly, in the electric leaching S2 stage, a solid to liquid (S/L) ratio in the suspension solution should be in the range from 1/10 kg/l to 1/12 kg/l. Above this ratio, an electrical conductivity of the suspension solution decreases, which results in increase in the voltage on the electrolyzer, and this is non-optimal.

Preferably, the electrochemical leaching S2 occurs in a pH range from 0,1 to 1,5 at a temperatures from 25 to 40°C. A ratio of the molar amount of sulfuric acid supplied to the suspension to the molar content of manganese in the raw material varies from 1,15 to 1,25. Due to these favorable features, a degree of manganese extraction from the raw material in the process of the electrochemical leaching is 90-95%.

Parameters of the electrochemical leaching S2 process are controlled by changing a redox potential of a Fe³⁺/Fe²⁺ system. At the end of the process, due to increase in the concentration of Fe²⁺ ions in the solution the redox potential sharply deviates in the negative direction. The process continues until the stationary value of the redox potential is set, which corresponds to the stationary concentration of Fe2⁺ ions in the solution. At the same time, approximately 50% - 60% of the total number of iron ions are in the form of Fe²⁺ ions. After reaching a stationary concentration of Fe²⁺ ions, supply of electric current to the electrolyzer stops and a certain amount of manganese-comprising raw material ore is supplied to the suspension for complete oxidation of Fe²⁺ ions into Fe³⁺. At the same time, preferably pH of the solution increases to 2,0 - 2,2, which allows optimizing the process even further.

Preferably, in the electrochemical leaching S2 process, an anode current density is 200-220 A/m². Alloy of lead with silver (1% Ag) or so-called "Oxide-ruthenium anodes", abbreviated "ORTA", is mainly used as anode, where oxides of titanium and ruthenium are deposited on titanium base. Oxygen is released at the anode with almost 100% current efficiency.

An electrolyzer voltage ranges from 2,8 V to 3,0 V, which contributes to the safety of personnel serving the reactor. Average energy consumption in the process of electric leaching S2 expressed in terms of one ton of manganese sulfate monohydrate is 750-800 kW/h, which is quite economical for technologies used in producing manganese sulfate monohydrate and reduces environmental impact.

As shown in fig. 3, after the electrochemical leaching S2, the suspension can be filtered. This contributes to a high purity end product (manganese sulfate monohydrate) according to the invention.

This filtrate comprising 220 - 275 g/l MnSO₄ (80 - 100 g/l Mn²⁺) and 12,5 - 16,1 g/l Fe₂(SO₄)₃ (3,5 - 4,5 g/l Fe³⁺) goes to stage of jarosite purification S3 for partial purification from iron (III). For this process, potassium sulfate and calcium hydroxide are added to the solution. A Fe³⁺/K⁺ molar ratio varies from 3,2 to 3,5. Under these conditions, the solution is almost completely purified from potassium ions, and 0.5 - 1.2 g/l Fe³⁺ ions remain in the solution. The optimum condition for the jarosite purification is pH varied from 2,2 to 2,6. Generally, the pH value is controlled by addition of calcium hydroxide, which simplifies the method for producing, according to the invention. A temperature of the jarosite purification S3 process varies from 90°C to 95°C, and a duration of the jarosite purification S3 process varies from 2 hours to 3 hours.

After the jarosite purification S3, solid and liquid phases are separated (Fig. 3). Fe³⁺ ions with concentration from 0,5 g/l to 1,2 g/l remain in the filtrate. A complete hydrolytic purification of S4 solutions from Fe³⁺ ions (Figs. 1, 3) is achieved by neutralizing the solution to pH 5,0-5,5. Preferably, calcium hydroxide is used as a neutralizing agent, which simplifies the method, according to the invention. Preferably, the process is performed at a temperature from 60°C to 70°C, which simplifies the method according to the invention. A solid residue of Fe(OH)₃ is separated from the aqueous phase by a filtration, and thus the process of the hydrolytic purification S4 of the solution from iron (III) is completed.

As shown in fig. 1 (see also fig. 3), the filtrate comprising about 80-100 g/l Mn²⁺ and heavy metal ions Ni²⁺, Co²⁺, Zn²⁺, Cu²⁺ is fed for a sulfide purification S5. Hydrogen sulfide H₂S, a total molar amount of which is 1,5-2,0 times higher than a molar amount of all impurities, is used as a first precipitator. Preferably, the process is performed with pH from 6 to 7 and a temperature from 60°C to 70°C, which simplifies the method according to the invention. Generally, pH is controlled by adding calcium hydroxide to the suspension, which simplifies the method according to the invention. Hydrogen sulfide H₂S and calcium hydroxide Ca(OH)₂ should be added while stirring the solution. When supply of these reagents is stopped, stirring of the solution is stopped and the suspension is settled for 12 hours.

As shown in fig. 1 (see also fig. 3), a fluoride purification S6 of solutions from calcium (Ca²⁺) and magnesium (Mg²⁺) ions is performed at the next stage. Manganese fluoride (MnF₂), a molar amount of which is 1,5-1,8 times higher than the molar amount of all impurities, is used as the second precipitator.

As shown in fig. 1 (see also fig. 3), at the next stage, the solution purified from the impurities enters a stage of autoclave crystallization S7. Before beginning of this stage, the manganese sulfate solution is acidified with high purity sulfuric acid to pH 1,4 - 1,6 to avoid formation of manganese hydroxides in the target product. The autoclave crystallization S7 is performed at a temperature from 160°C to 165°C and at a pressure from 0.60 MPa to 0.65 MPa under constant stirring of the solution. The solution is heated by an electric heater located in the outer jacket of the autoclave. A filtering device is installed inside the autoclave. At the end of the process, the suspension is filtered and manganese sulfate monohydrate crystals are removed from the autoclave.

As shown in fig. 1 (see also fig. 3), in the next stage, the crystals of manganese sulfate monohydrate produced by the autoclave crystallization are flushed S8 with anhydrous methanol at a temperature from 30°C to 40°C during from 0,5 hour to 1 hour. In this case, a ratio of a salt crystal mass and a volume of anhydrous methanol is 1/2,5 kg/l. After flushing with methanol, the suspension is filtered and the crystals are dried at a temperature between 100°C and 110°C. Phase changes are observed in the product at the higher temperature, which is non-optimal.

The solution flowing out of the autoclave and comprising 10-15 g/l Mn²⁺ (27,5 - 41,0 g/l MnSO₄) is treated with an ammonium carbonate solution in order to precipitate manganese carbonate hemihydrate. The filtrate produced after the separation of manganese carbonate is a dilute solution of ammonium sulfate with a concentration of 24-36 g/l (NH₄)₂SO₄: see stage S9 in Fig. 1.

Therefore, the proposed method provides producing, together with a main target product of high purity manganese sulfate monohydrate, a second product, namely: high purity manganese carbonate hemihydrate. It expands functionalities of the method according to the invention. A by-product obtained in this process, namely dilute ammonium sulfate solution (see fig. 3), can be used as, for example, a liquid fertilizer. It expands the functionalities of the method according to the invention.

An example of an implementation of the method according to the invention is given below.

Oxide ore (Chiatursky mine, Georgia), mechanically enriched, was taken as a feedstock. The ore composition, %: Mn - 51,1; MnO₂ - 80,8; Fe₂O₃ - 1,72; CaO - 3,3; MgO - 1,8; Al₂O₃ - 2,4; SiO₂ - 2,8.

A wet grinding was performed in a ball mill. 10 kg of the ore and 8 liters of water is fed to the mill. A rotation speed of a mill drum is 1 rpm. A duration of the grinding is 1,5 hours. A maximum ore particles size after grinding is 0,10-0,12 mm. The ore suspension produced in the mill is fed to an electric leaching reactor.

The electrochemical reactor is made of organic glass. A working capacity of an electrolyser is 12,6 liters. A stainless steel mesh was taken as a cathode. A size of each mesh cell, mm: 0,3x0,3. An oxide ruthenium-titanium anode was used as an anode. A current strength on the electrolyzer is 20A. Cathodic and anodic current densities were 210,5 and 205,3 A/m², respectively. The suspension circulated in an electrolyzer-intermediate vessel-electrolyser system using a peristaltic pump. An intermediate vessel is required to maintain a constant level of suspension in the electrolyzer. Electrodes are immersed in the intermediate vessel for measuring pH and redox potential of the suspension solution.

Chemically pure sulfuric acid (98%, d=1,83 g/cm³) and a FeSO₄ solution comprising Fe²⁺ with a concentration of 75,5 g/L were used to prepare an initial leaching solution. The FeSO₄ solution was prepared using a reactive grade FeSO_{4·}7H₂O salt.

1,25 kg of the wet manganese ore (on a dry basis) and 12,6 I of the initial solution (the solution had the following composition, g/l: H₂SO₄ - 35,8; Fe²⁺ - 3,9) were fed to the electrolyzer. At that time, a solid to liquid ratio S/L amounted to 1/10 kg/l.

After the peristaltic pump is turned on, a compressed air from a compressor was fed to the electrolyzer, and then a 20A constant electric current was passed through the electrolyzer.

The electrochemical leaching process was performed with a controlled pH value, which was maintained in 0,9-1,0 range. pH was maintained by feeding concentrated sulfuric acid (41,2%, d = 1,08) into the solution.

The electrochemical leaching process was controlled by measuring a redox potential of Fe³⁺/Fe²⁺ system (E_{Fe3+/Fe2+}). When the process goes in the optimal mode, a concentration of Fe²⁺ ions in the solution should be minimal (below 0,1 g/l). At this time, E_{Fe3+/Fe2+} fluctuates in a range from 0,65 V to 0,67 V (the potential was measured relative to a saturated silver chloride reference electrode). An increase in the concentration of these ions shows that the concentration of MnO₂ particles of the ore in the suspension decreased and a most part of MnO₂ of the ore went into solution forming MnSO₄. At this time, E_{Fe3+/Fe2+} shifts to a value from 0,45 V to 0,47 V.

In the experiment, a negative potential shift was observed in 31 hours after the beginning of the process. By this time, a second portion of the ore equal to 1,27 kg was fed to the electrolyzer.

A duration of the electrochemical leaching process is 62,5 hours. A required electricity is 1250 A/hour. At the end of the process, the redox potential ranges from 0,48 V to 0,50 V, which indicates a presence of Fe²⁺ ions in the solution, a concentration of which reaches 2,3 g/l.

Supply of electric current to the electrochemical reactor is stopped and 50 g (on a dry basis) of the wet ore is fed to the suspension to oxidize Fe²⁺ ions remaining in the solution. The process takes 25 minutes. A total weight of the processed ore is 2,57 kg.

The suspension produced after electric leaching is filtered. The solid precipitate is flushed with 600 ml of hot water. Flush water is added to the basic solution. A weight of a dry ore cake is 515g.

A volume of the filtrate is 12,8 liters. Its composition, g/l: Mn²⁺ (93,6), Fe³⁺ (4,3); pH is 1,92.

A degree of manganese extraction from the ore is 91,2%. A current efficiency of the electric leaching process is 93,4%.

A jarosite purification of the filtrate is performed in order to reduce the concentration of Fe³⁺ ions and complete purification of the solution from K⁺ ions. A K₂SO₄ solution comprising 31,7 g of K₂SO₄ and 300 ml of water is added to the basic solution heated to 92°C. pH of the solution was adjusted to 2,3 with 15% Ca(OH)₂ solution. A volume of the added Ca(OH)₂ solution is 600 ml. As a result, iron precipitated in the form of potassium jarosite, which is easily separated from the solution by filtration.

After the jarosite purification, a residual concentration of Fe³⁺ ions in the solution is 0,8 g/l. For complete purification from Fe³⁺ ions, the solution was neutralized with 15% Ca(OH)₂ solution to pH 5,3. A volume of the added Ca(OH)₂ solution is 157 ml. The process is performed at a temperatures from 65°C to 70°C.

After filtration, the MnSO₄ solution purified from iron (III) with 13,3 liters volume is fed for sulfide purification. The composition of the solution, g/l: 0,35 Ni²⁺, 0,06 Co²⁺, 0,03 Cu²⁺, 0,15 Zn²⁺.

A sulfide purification is performed at a temperature 60-70°C by passing hydrogen sulfide (H₂S) into the solution. H₂S was produced by adding diluted sulfuric acid solution to sodium sulfide solution. About 0,006m³ of H₂S was passed through 13,3 liters of MnSO₄ solution. In order to keep pH in the range of 6-7, 15% solution of Ca(OH)₂ in the amount of 150 ml was added to the solution.

The MnSO₄ solution purified from ions of heavy metals comprised, g/l: 0,002 Ni²⁺, 0,0006 Co²⁺, 0,003 Cu²⁺, 0,0008Zn²⁺. After filtration, the MnSO₄ solution purified from ions of heavy metals is fed to fluoride purification in order to remove Ca²⁺ and Mg²⁺ ions, which concentrations were 0,87 g/l and 0,67 g/l respectively. The purification process is performed at a temperature from 60°C to 65°C and pH from 5,1 to 5,2. 7,2 g of solid manganese fluoride was added to the solution. A precipitant was prepared by dissolving electrolytic manganese metal in hydrofluoric acid (HF). After the purification, concentration of Ca²⁺ and Mg²⁺ ions decreased to 15ppm and 18ppm, respectively.

The manganese sulfate solution purified from the impurities, comprising 90,5 g/l Mn²⁺ (248,5 g/l MnSO₄), is fed to the autoclave crystallization process. Before beginning of the process, the solution is acidified with ultrapure sulfuric acid to pH 1,55. A working capacity of the autoclave is 2,8 liters. The autoclave is made of HASTELLOY steel^{™}. The process is performed at 6,5 atm pressure and 165°C temperature under constant stirring of the solution. The duration of the process is 1,5 hours. When the optimum temperature and pressure is reached, the heating process stops. The salt crystals are filtered under pressure. The filtering device is integrated inside the autoclave. After a pressure drop, the obtained product is removed from the autoclave. A weight of the wet product (moisture content from 4% to 5%) of manganese sulfate monohydrate is 784,1 g. 0,98 I of the filtrate comprising 9,3 g/l of Mn²⁺ enters a stage of manganese carbonate producing.

After unloading from the autoclave, 784 g of manganese sulfate monohydrate crystals are transferred into a three-necked (that is, with three-necks) round-bottom flask equipped with anchor-type stirrer and cooler, where 1,96 liters of anhydrous methanol are poured at 35°C. After rotating the suspension with the stirrer during 1 hour, using a peristaltic pump the suspension is transferred to the glass filter for vacuum filtration. The crystals on the filter are treated with a new portion of anhydrous methanol. After this operation, the purified salt crystals are dried in a thermostat at the temperature 105°C during 3 hours. 750 g of manganese sulfate monohydrate crystals were received. The product yield when flushed with anhydrous methanol is 95,7%. The composition of the manganese sulfate monohydrate produced is shown in the table below. The analysis was performed with the help of an ICP method.

**Table**

| Item | Standard HGT4823-2015EN D(7) | product |
|---|---|---|
| MnSO₄·H₂O w/%, ≥ | 99.0 | 99.9 |
| Calculated as Mn w/%, ≥ | 32.0 | 32.5 |
| Iron (Fe), w/%, ≤ | 0.001 | ND |
| Zinc (Zn), w/%, ≤ | 0.001 | <0.0001 |
| Copper (Cu), w/%, ≤ | 0.001 | <0.0001 |
| Lead (Pb), w/%, ≤ | 0.0010 | <0.0001 |
| Cadmium (Cd), w/%, ≤ | 0.0005 | ND |
| Potassium (K), w/%, ≤ | 0.01 | ND |
| Sodium (Na), w/%, ≤ | 0.01 | 0.0025 |
| Calcium (Ca), w/%, ≤ | 0.01 | 0.01 |
| Magnesium (Mg), w/%, ≤ | 0.01 | 0.01 |
| Nickel (Ni), w/%, ≤ | 0.005 | <0.0001 |
| Cobalt (Co), w/%, ≤ | 0.005 | <0.0001 |

100,3 ml of ammonium carbonate solution with 158,5 g/l concentration (NH₄)₂O₃ is added to the filtrate produced after the autoclave crystallization. 20,5 g of high purity manganese carbonate hemihydrate (MnCO_{3·}0,5H₂O) is produced after filtration and drying of the solid precipitate at 105°C. 1,1 I of the filtrate comprising 19,8 g (NH₄)₂SO₄ can be used as a liquid fertilizer.

### Bibliography

D1: Zhang, W., Cheng, C.Y., 2007. Manganese metallurgy review. Part I: Leaching of ores/secondary materials and recovery of electrolytic/chemical manganese dioxide. Hydrometallurgy 89, 137-159.

## Claims

1. method for producing manganese sulfate monohydrate, **characterized in that** it comprises following stages:
• a stage of electric leaching (S2) of manganese-comprising ore at a temperature from 20°C to 40°C and under constant air purging in a diaphragm-less electrolyzer,
• stages of jarosite (S3), hydrolytic (S4), sulfide (S5) and fluoride (S6) purifications of the obtained solutions,
• a stage of autoclave crystallization (S7) of a salt at a temperature from 160°C to 165°C and at a pressure from 0,60 MPa to 0,65 MPa,
**in that** the stage of electric leaching (S2) is performed with a concentration of iron ions from 3,5 g/l to 4,5 g/l using a stainless steel mesh as a cathode with a cathode current density from 200 A/m² to 250 A/m²,
**in that** a process control at the electric leaching stage (S2) is carried out by changing a value of a redox potential of a Fe³⁺/Fe²⁺ system,
**in that** the salt obtained after the autoclave crystallization stage (S7) is flushed (S8) with anhydrous methanol at a temperature from 30°C to 40°C during from 0,5 hour to 1 hour, while a ratio of a salt crystal mass and an anhydrous methanol volume is 1/2,5 kg/I.

## Patentansprüche

1. Verfahren zum Herstellen von Mangansulfatmonohydrat,
**dadurch gekennzeichnet, dass** es folgende Stufen umfasst:
• eine Stufe eines elektrischen Herauslösens (S2) von Manganumfassendem Erz bei einer Temperatur von 20 °C bis 40 °C und unter einer konstanten Luftspülung in einem membranlosen Elektrolyseur,
• Stufen von Jarosit (S3)-, hydrolytischen (S4), Sulfid (S5)- und Fluorid (S6)-Reinigungen der erhaltenen Lösungen,
• eine Stufe der Autoklavenkristallisation (S7) eines Salzes bei einer Temperatur von 160 °C bis 165 °C und bei einem Druck von 0,60 MPa bis 0,65 MPa,
**dass** die Stufe des elektrischen Herauslösens (S2) mit einer Konzentration von Eisenionen von 3,5 g/l bis 4,5 g/l unter Verwendung eines Edelstahlsiebs als eine Kathode mit einer Kathodenstromdichte von 200 A/m² bis 250 A/m² durchgeführt wird,
**dass** eine Prozesssteuerung bei der Stufe (S2) des elektrischen Herauslösens durch Ändern eines Werts eines Redoxpotentials eines Fe³⁺/Fe²⁺-Systems durchgeführt wird,
**dass** das nach der Autoklavenkristallisationsstufe (S7) erhaltene Salz während von 0,5 Stunden bis 1 Stunde bei einer Temperatur von 30 °C bis 40 °C mit wasserfreiem Methanol gespült wird (S8), während ein Verhältnis einer Salzkristallmasse und eines wasserfreien Methanolvolumens 1/2,5 kg/l beträgt.

## Revendications

1. Méthode de production de sulfate de manganèse monohydraté, **caractérisée en ce qu'**elle comprend les étapes suivantes :
• une étape de lixiviation électrique (S2) d'un minerai comprenant du manganèse à une température de 20°C à 40°C et sous purge d'air constante dans un électrolyseur sans diaphragme,
• des étapes de purifications jarosite (S3), hydrolytique (S4), sulfureuse (S5) et fluorureuse (S6) des solutions obtenues,
• une étape de cristallisation en autoclave (S7) d'un sel à une température de 160°C à 165°C et à une pression de 0,60MPa à 0,65 MPa,
**en ce que** l'étape de lixiviation électrique (S2) est réalisée avec une concentration d'ions de fer de 3,5 g/l à 4,5 g/l en utilisant une grille en acier inoxydable comme une cathode avec une densité de courant cathodique de 200 A/m² à 250 A/m²,
**en ce qu'**un contrôle du processus à l'étape de lixiviation électrique (S2) est effectué en modifiant une valeur d'un potentiel d'oxydoréduction d'un système Fe³⁺/Fe²⁺,
**en ce que** le sel obtenu après l'étape de cristallisation en autoclave (S7) est rincé (S8) avec du méthanol anhydre à une température de 30°C à 40°C entre 0,5 heure et 1 heure alors qu'un rapport entre une masse de cristaux de sel et un volume de méthanol anhydre est de 1/2,5 kg/l.
